# EUROPÄISCHE PATENTSCHRIFT

(11) **EP 1 788 908 B1**
(45) Veröffentlichungstag und Bekanntmachung des Hinweises auf die Patenterteilung: **09.11.2016**
(21) Anmeldenummer: 04765087.4
(22) Anmeldetag: 10.09.2004
(51) Int. Cl.: A47B 96/14, F16B 12/50

(54) **RUNDSÄULE MIT ADAPTERSCHIENE**
COLUMN COMPRISING AN ADAPTER RAIL
MONTANT ROND A RAILS ADAPTATEURS

(43) Veröffentlichungstag der Anmeldung: 30.05.2007
(73) Patentinhaber: Tegometall International AG, 8574 Lengwil (CH)
(72) Erfinder: BOHNACKER, Ulrich, CH-8559 Fruthwilen (CH)
(74) Vertreter: Strehl Schübel-Hopf & Partner
(86) Internationale Anmeldenummer: PCT/EP2004/010163
(87) Internationale Veröffentlichungsnummer: WO 2006/027015

(56) Entgegenhaltungen:
- DE-A1- 19 848 401
- FR-A- 1 431 392
- FR-A- 2 487 452
- FR-A1- 2 352 200
- GB-A- 2 232 426
- US-A- 4 923 322

## Beschreibung

Rundsäulen sind wegen ihrer bei gegebenem Materialeinsatz hohen Stabilität als Tragelemente im Regalbau bestens geeignet (EP 1 132 026 A1).

FR 2 352 200 A1 offenbart die Verwendung einer Rundsäule in einem Regal oder Möbelstück. Die Druckschrift betrifft die Verbindung dieser Rundsäule mit einer rechtwinklig zu ihr verlaufenden Traverse aus einem Vierkantprofil. Die Stirnseite der Traverse weist Haken auf, die in Schlitze der Rundsäule eingreifen. Die zweiteilige Form des Anspruchs 1 geht von einem solchen Stand der Technik aus.

Der vorliegenden Erfindung liegt der Gedanke zugrunde, Rundsäulen in Verbindung mit weiteren Strukturelementen (auch Regalbauelementen) für andere Gegenstände, etwa Theken für Verkaufs-, Büro- und Lagerzwecke heranzuziehen. Wegen des Fehlens verletzungsgefährdender Ecken und Kanten und ihrer geschlossenen ästhetischen Form sind Rundsäulen auch für solche Zwecke geeignet.

Der Erfindung liegt somit die Aufgabe zugrunde, eine aus dem Lagerbau bekannte, mit Öffnungen zum Einhängen von Bauelementen versehene Rundsäule zur Erzeugung von Einrichtungsgegenständen wie Theken geeignet zu machen.

Die Lösung dieser Aufgabe gelingt mit der in Anspruch 1 gekennzeichneten Adapterschiene.

Diese läßt sich aufgrund ihrer Gestaltung in Öffnungen der Rundsäule einhängen und gestattet wegen ihres Vierkantprofils den Anbau weiterer im Regalbau üblicher Strukturelemente in zwei zueinander senkrechten Richtungen und damit die Erzeugung eines insgesamt tisch- oder quaderförmigen Einrichtungsgegenstands.

Da die Adapterschiene ein offenes Vierkantprofil aufweist und an beiden der offenen Ecke benachbarten Kanten Haken zum Einhängen in die Öffnungen der Rundsäule aufweist, läßt sich mit der erfindungsgemäßen Kombination von Rundsäule und Adapterschiene ein zusammengesetzter Einrichtungsgegenstand hoher Tragfähigkeit herstellen. Die im kennzeichnenden Teil des Anspruchs 1 angegebene Maßnahme gestattet es, die Rundsäule als Zwischensäule in Fluchtung mit zwei Ecksäulen eines Einrichtungsgegenstands einzusetzen.

Die Weiterbildung der Erfindung nach Anspruch 2 ist im Sinne einer einfachen Montage zweckmäßig.

Die Gestaltung der Adapterschiene gemäß den Ansprüchen 4 bis 6 sowie die Gestaltung der Rundsäule nach Anspruch 7 sind im Hinblick auf die gegenseitige Verbindung benachbarter Rundsäulen durch tragfähige Verbindungselemente von Bedeutung.

Die Ansprüche 9 bis 12 beziehen sich auf eine aus Rundsäulen als tragenden Strukturelementen sowie Verbindungselementen aufgebaute Theke.

Ausführungsbeispiele der Erfindung werden nachstehend anhand der Zeichnungen näher erläutert. Darin zeigen
Fig. 1 eine perspektivische Darstellung einer unter Verwendung von vier Rundsäulen aufgebauten Theke,
Fig. 2 einen Horizontalschnitt durch die Theke nach Fig. 1 unterhalb der oberen Thekenplatte,
Fig. 3 eine vergrößerte Teilansicht der linken unteren Ecke der Schnittdarstellung nach Fig. 2,
Fig. 4 eine der Fig. 3 ähnliche Darstellung eines anderen Ausführungsbeispiels,
Fig. 5 einen Querschnitt durch die gemäß Fig. 1 bis 4 verwendete Adapterschiene,
Fig. 6 eine Teilseitenansicht der Adapterschiene, gesehen in Richtung des Pfeils VI in Fig., 5 und
Fig. 7 eine Teildarstellung des gestanzten aber noch nicht gekanteten Blechmaterials der Adapterschiene nach Fig. 6.

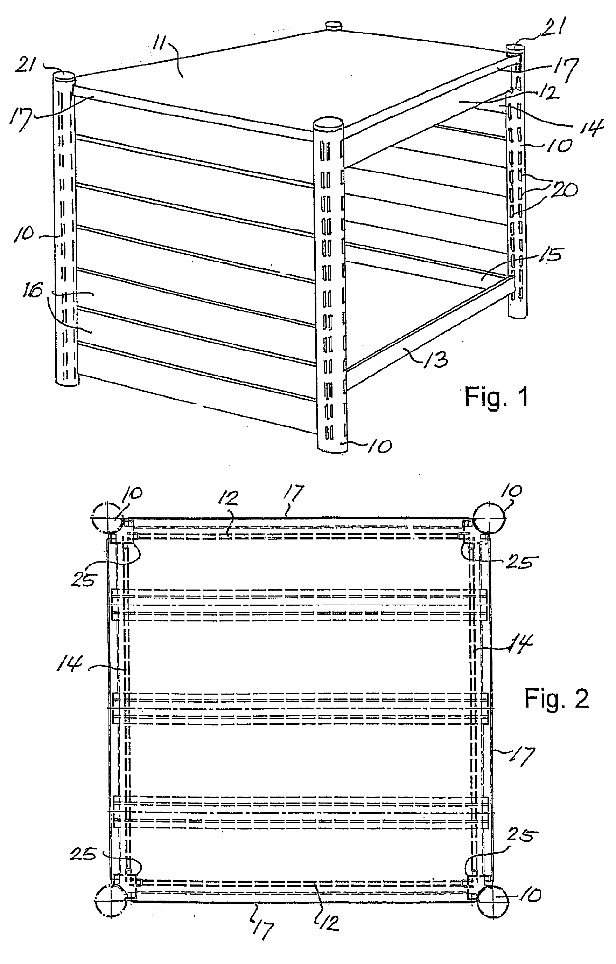

Die in Fig. 1 gezeigte Theke besteht im wesentlichen aus vier Rundsäulen **10,** die durch eine Tischplatte **11,** in Richtung der Thekenbreite verlaufende Verbindungsschienen **12, 13** und in Richtung der Tiefe verlaufende Verbindungsschienen **14, 15** untereinander verbunden sind. Die Verbindungsschienen **12...15** können gleichzeitig zur Aufnahme von (nicht dargestellten) Fachböden unterhalb der Tischplatte **11** dienen.

Ferner sind Seitenwände aus einer Reihe von übereinander angeordneten streifenförmigen Verkleidungselementen **16** gebildet. In gleicher Weise kann auch die in Fig. 1 nicht sichtbare Längswand der Theke durch bandförmige Verkleidungselemente geschlossen sein. Alternativ können diese nicht-tragenden Wandelemente aus Lochplatten gebildet sein.

Die Tischplatte **11** ist, wie in Fig. 1 angedeutet, im Bereich der Rundsäulen **10** ausgeschnitten und weist längs ihren vier Seiten Abkantungen **17** auf, die mit Haken zum Einhängen in obere Schlitze **20** der Rundsäulen **10** versehen sind.

In dem in Fig. 1 gezeigten Ausführungsbeispiel ragen die Rundsäulen **10** über die Oberfläche der Tischplatte **11** hinaus und sind durch Kappen **21** verschlossen. Alternativ ist es möglich, die Tischplatte **11** so zu gestalten, daß sie auf den oberen Enden der Rundsäulen **20** aufliegt, wobei ein zusammenhängender umlaufender Randflansch so geformt sein kann, daß er die Rundsäulen bündig umgibt. Eine weitere Alternative besteht darin, die Tischplatte **11** größer als den Grundriß des von den vier Rundsäulen **10** gebildeten Unterbaus zu machen und an ihrer Unterseite mit Zapfen zum Einführen in die offenen oberen Enden der Rundsäulen **10** zu versehen.

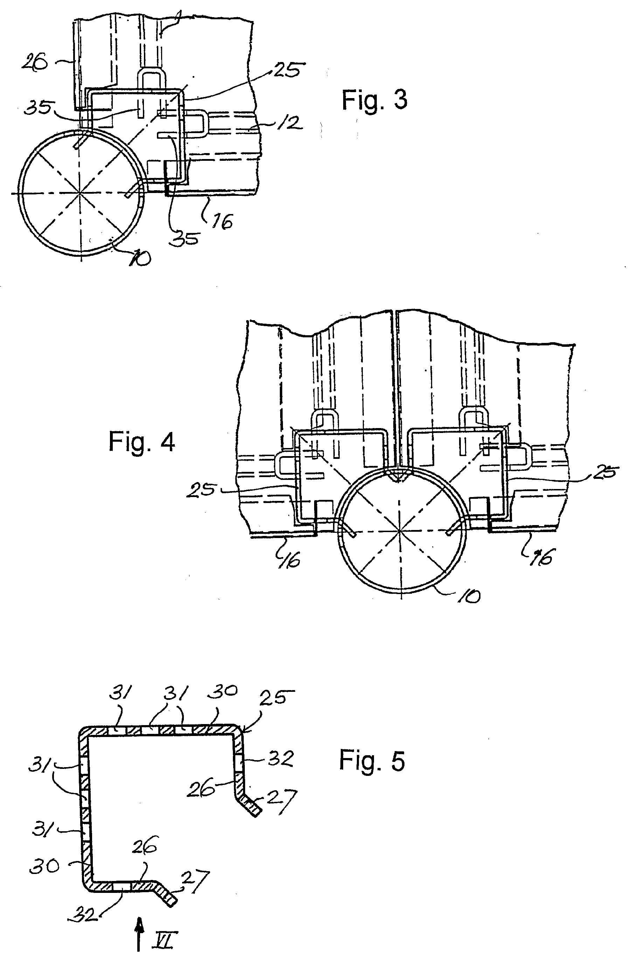

Während die Tischplatte **11** unmittelbar mit den Rundsäulen **10** verbunden oder auf diese aufgesetzt ist, sind die übrigen Bauelemente der Theke in der aus Fig. 2 und 3 ersichtlichen Weise mit in die Rundsäulen **10** jeweils eingehängten Adapterschienen **25** verbunden.

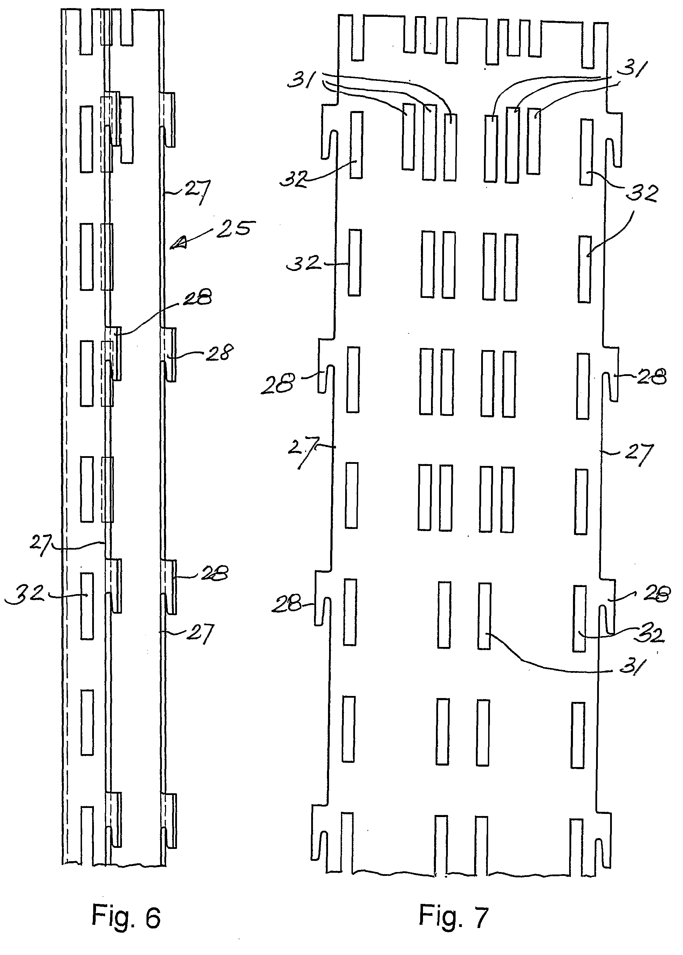

Gemäß Fig. 3 bis 7 besteht die Adapterschiene **25** aus einem generell quadratischen, jedoch an einer Ecke offenen Vierkantprofil, wobei die beiden die offene Ecke definierenden Schenkel **26** jeweils an ihrer freien Kante einen unter 45° nach außen gekröpften Flansch **27** aufweisen. Die beiden Flansche **27** der Adapterschiene **25** verlaufen parallel zueinander und bilden an ihren freien Kanten jeweils eine Reihe von übereinander liegenden Haken **28.** Die Haken **28** dienen zum Einhängen der Adapterschiene **25** in entsprechende Schlitze **20** einer Rundsäule **10** und sind in dem in Fig. 6 und 7 gezeigten Ausführungsbeispiel übereinander in Abständen angeordnet, die dem doppelten Maß der Teilung der Schlitze **20** in der Rundsäule **10** entsprechen.

Die weiteren beiden Schenkel **30** der Adapterschiene **25,** die die der offenen Ecke gegenüberliegende Ecke des Vierkantprofils bilden, sind jeweils mit Längsschlitzen **31** versehen. In den Schenkeln **26,** die im wesentlichen halb so breit sind wie die Schenkel **30** sind Längsschlitze **32** ausgebildet. In Längsrichtung der Adapterschiene **25** sind die Schlitze **31, 32** in einer Teilung angeordnet, die mit der Teilung der Schlitze **20** in der Rundsäule **10** übereinstimmt.

Wie in Fig. 6 und 7 gezeigt, kann es zweckmäßig sein, nahe dem oberen Ende (und entsprechend nahe dem nicht gezeigten unteren Ende) der Adapterschiene **25** in den beiden Schenkeln **30** zwei oder drei nebeneinander liegende Schlitze **31** vorzusehen.

Wie aus Fig. 2 und 3 hervorgeht, dienen die Schlitze **31** zum Einhängen der Verbindungsschienen **12...15.** In dem gezeigten Ausführungsbeispiel sind diese Verbindungsschienen aus U-Profilschienen gebildet, die an ihren Enden jeweils ein Paar nebeneinander liegender Haken **35** zum Einhängen in ein entsprechendes Paar von nebeneinander liegenden Schlitzen 30 der Adapterschiene 25 aufweisen. In Richtung der Tiefe der Theke können zwischen den oberen und unteren Verbindungsschienen **14, 15** weitere (nicht gezeigte) Schienen oder Stäbe eingehängt werden, die als Konsolen für (ebenfalls nicht gezeigte) Zwischenböden unterhalb der Tischplatte **11** dienen können.

Die in den Teilschenkeln **26** vorhandenen Schlitze **32** sind insbesondere zum Einhängen der Verkleidungselemente **16** bestimmt. Diese sind, wie in Fig. 3 gezeigt, an ihren Enden abgekantet und mit Haken zum Einhängen in die Schlitze **32** versehen. In Höhenrichtung können die Verkleidungselemente **16** gekröpft sein und einander übergreifen.

In Fig. 4 ist ein Ausführungsbeispiel gezeigt, bei dem die Säule **10** eine Zwischensäule bildet und mit zwei um 90° gegeneinander versetzten Adapterschienen **25** versehen ist. In beide Adapterschienen **25** sind in gleicher Weise wie in Fig. 3 Verbindungsschienen **12...15** und Verkleidungselemente **16** eingehängt. Lediglich im Bereich zwischen den beiden Adapterschienen **25** sind keine Verkleidungselemente **16,** die sich im Innern der Theke befinden würden, vorgesehen.

Die Rundsäulen **10** bestehen aus einem Metallrohr, während die übrigen Bauelemente aus gestanztem und gekantetem Stahlblech gebildet sind. Für die Verkleidungselemente **16** kommen alternativ auch andere Materialien, insbesondere Kunststoff in Betracht. Ebenso können die die oberen Enden der Rundsäulen **10** verschließenden Kappen **21** - soweit vorhanden - aus Kunststoff bestehen.

## Patentansprüche

1. Rundsäule **(10)** mit Adapterschiene **(25)** zum Anbauen von Strukturelementen an die Rundsäule **(10),**
wobei die Adapterschiene **(25)** ein Vierkantprofil hat, das Haken (28) zum Einhängen in Öffnungen **(20)** der Rundsäule **(10)** aufweist,
**dadurch gekennzeichnet, dass** das Vierkantprofil an genau einer seiner vier Ecken offen ist und seine die offene Ecke definierenden Schenkel **(26)** an ihren freien Kanten mit den Haken (28) versehen sind, wobei der Abstand zwischen den freien Kanten der Schenkel **(26)** kleiner ist als die Länge einer Viertelkreisbogensehne der Rundsäule **(10).**

2. Rundsäule **(10)** nach Anspruch 1, wobei die Haken **(28)** jeweils an einem auswärts gekröpften Flansch **(27)** des betreffenden Schenkels **(26)** ausgebildet sind und die beiden Flansche **(27)** im wesentlichen parallel zueinander verlaufen.

3. Rundsäule **(10)** nach einem der vorhergehenden Ansprüche, wobei die beiden die offene Ecke des Vierkantprofils definierenden Schenkel **(26)** im wesentlichen halb so breit sind wie die beiden anderen Schenkel **(30).**

4. Rundsäule **(10)** nach einem der vorhergehenden Ansprüche, wobei die Adapterschiene **(25)** in den Schenkeln **(30),** die die der offenen Ecke gegenüberliegende Ecke des Vierkantprofils bilden, Öffnungen (31) zum Einhängen von horizontalen Regalelementen aufweist.

5. Rundsäule **(10)** nach Anspruch 4, wobei die Adapterschiene **(25)** in den Schenkeln **(30),** die die der offenen Ecke gegenüberliegende Ecke des Vierkantprofils bilden, mehrere nebeneinander angeordnete Öffnungen **(31)** aufweist.

6. Rundsäule **(10)** nach einem der vorhergehenden Ansprüche, wobei die Adapterschiene **(25)** in ihren die offene Ecke definierenden Schenkeln (26) Öffnungen **(32)** zum Einhängen von Wandelementen aufweist.

7. Rundsäule **(10)** nach einem der vorhergehenden Ansprüche, wobei die Rundsäule **(10)** an mindestens zwei einem Viertelkreisbogen entsprechenden Bereichen Öffnungen **(20)** zum Einhängen einer jeweiligen Adapterschiene **(25)** hat.

8. Rundsäule **(10)** nach einem der vorhergehenden Ansprüche, wobei die Öffnungen **(20, 31, 32)** vertikal verlaufende Längsschlitze sind.

9. Theke, deren Beine jeweils von einer Rundsäule **(10)** mit Adapterschiene **(25)** nach einem der vorhergehenden Ansprüchen gebildet sind, wobei mindestens eine senkrechte Fläche der Theke mit einem Wandelement **(16)** geschlossen ist.

10. Theke nach Anspruch 9, wobei das Wandelement **(16)** eine Lochplatte ist.

11. Theke nach Anspruch 9 oder 10, wobei zwei benachbarte Beine durch in ihre Adapterschienen **(25)** eingehängte Verbindungsschienen **(12 ...15)** verbunden sind.

12. Theke nach Anspruch 11, wobei gegenüberliegende Beinpaare durch Verbindungsschienen **(12...15)** verbunden sind und gegenüberliegende Verbindungsschienen einen Fachboden tragen.

## Claims

1. A round column **(10)** with an adapter rail **(25)** for attaching structural components to the round column **(10),**
wherein the adapter rail **(25)** has a square profile with hooks **(28)** for engaging in openings **(20)** of the round column **(10),**
**characterised in that** the square profile is open at exactly one its four corners and the free edges of the legs **(26)** defining the open corner are provided with the hooks **(28),** wherein the distance between the free edges of the legs **(26)** is smaller than the length of a quarter circle chord of the round column **(10).**

2. The round column **(10)** of claim 1, wherein the hooks **(28)** are formed at an outward bent flange **(27)** of each leg **(26),** and the two flanges **(27)** extend substantially parallel to each other.

3. The round column **(10)** of any preceding claim, wherein the two legs **(26)** defining the open corner of the square profile have substantially half the width of the two other legs **(30).**

4. The round column **(10)** of any preceding claim, wherein openings **(31)** for receiving horizontal shelf elements are formed in the legs **(30)** of the adapter rail **(25),** which define the corner opposite the open corner of the square profile.

5. The round column **(10)** of claim 4, wherein a plurality of juxtaposed openings **(31)** are formed in the legs **(30)** of the adapter rail **(25),** which define the corner opposite the open corner of the square profile.

6. The round column **(10)** of any preceding claim, wherein openings **(32)** for receiving wall elements are formed in the legs **(26)** of the adapter rail **(25),** which defining the open corner.

7. The round column **(10)** of any preceding claim, wherein openings **(20)** for receiving an adapter rail **(25)** are formed in at least two areas of the round column **(10),** each of which corresponds to a quarter circle.

8. The round column **(10)** of any preceding claim, wherein the openings **(20, 31, 32)** are vertically extending elongated slots.

9. A counter having legs each formed of a round column **(10)** with an adapter rail **(25)** according to any preceding claim, wherein at least one perpendicular surface of the counter is closed by a wall element **(16).**

10. The counter of claim 9, wherein the wall element **(16)** is a perforated panel.

11. The counter of claim 9 or 10, wherein two adjacent legs are interconnected by connecting rails **(12... 15)** hooked in the respective adapter rails **(25).**

12. The counter of claim 11, wherein opposite pairs of legs are interconnected by connecting rails **(12... 15),** and opposite connecting rails carry a shelf.

## Revendications

1. Colonne ronde (10) avec un rail adaptateur (25) pour le montage d'éléments structurels sur la colonne ronde (10),
le rail adaptateur (25) présentant un profil carré, qui comprend des crochets (28) pour la suspension dans des ouvertures (20) de la colonne ronde (10),
**caractérisée en ce que** le profil carré est ouvert au niveau d'exactement un de ses quatre angles et ses montants (26) définissant son angle ouvert étant munis, au niveau de leurs arêtes libres, des crochets (28), la distance entre les arêtes libres des montants (26) étant inférieure à la longueur d'une corde d'arc d'un quart de cercle de la colonne ronde (10).

2. Colonne ronde (10) selon la revendication 1, les crochets (28) étant disposés au niveau d'une bride (27), courbée vers l'extérieur, du montant correspondant (26) et les deux brides (27) s'étendant essentiellement parallèlement entre elles.

3. Colonne ronde (10) selon l'une des revendications précédentes, les deux montants (26) définissant l'angle ouvert du profil carré présentent essentiellement la moitié de la largeur des deux autres montants (30).

4. Colonne ronde (10) selon l'une des revendications précédentes, le rail adaptateur (25) comprenant, dans les montants (30), qui constituent l'angle opposé à l'angle ouvert du profil carré, des ouvertures (31) pour la suspension d'éléments d'étagères horizontaux.

5. Colonne ronde (10) selon la revendication 4, le rail adaptateur (25) comprenant, dans les montants (30), qui constituent l'angle opposé à l'angle ouvert du profil carré, plusieurs ouvertures (31) disposées les unes à côté des autres.

6. Colonne ronde (10) selon l'une des revendications précédentes, le rail adaptateur (25) comprenant, dans ses montants (26) définissant l'angle ouvert, des ouvertures (32) pour la suspension d'éléments de paroi.

7. Colonne ronde (10) selon l'une des revendications précédentes, la colonne ronde (10) comprenant, au niveau d'au moins deux zones correspondant à un arc d'un quart de cercle, des ouvertures (20) pour la suspension d'un rail adaptateur (25) correspondante.

8. Colonne ronde (10) selon l'une des revendications précédentes, les ouvertures (20, 31, 32) étant des fentes longitudinales s'étendant verticalement.

9. Comptoir dont les pieds sont constitués d'une colonne ronde (10) avec un rail adaptateur (25) selon l'une des revendications précédentes, au moins une surface verticale du comptoir étant fermée avec un élément de paroi (16).

10. Comptoir selon la revendication 9, l'élément de paroi (16) étant une plaque perforée.

11. Comptoir selon la revendication 9 ou 10, deux pieds adjacents étant reliés par des rails de liaison (12 ... 15) accrochés dans leurs rails adaptateurs (25).

12. Comptoir selon la revendication 11, deux paires de pieds opposés étant reliées par des rails de liaison (12 ... 15) et des rails de liaison opposés supportant un fond de compartiment.
